Europäisches Patentamt

European Patent Office

Office européen des brevets

(19)

(11) **EP 0 926 626 A1**

(12) **DEMANDE DE BREVET EUROPEEN**

(43) Date de publication:
**30.06.1999 Bulletin 1999/26**

(51) Int Cl.$^6$: **G06T 5/40**

(21) Numéro de dépôt: **98204269.9**

(22) Date de dépôt: **16.12.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **23.12.1997 FR 9716309**

(71) Demandeur: **Koninklijke Philips Electronics N.V.**
**5621 BA Eindhoven (NL)**

(72) Inventeur: **Florent, Raoul**
**75008 Paris (FR)**

(74) Mandataire: **Lottin, Claudine**
**Société Civile S.P.I.D.**
**156, Boulevard Haussmann**
**75008 Paris (FR)**

(54) **Procédé de traitement d'image pour réduire le bruit dans une image d'une séquence de trois images temporelles et appareil d'imagerie médicale mettant en oeuvre un tel procédé**

(57) L'invention concerne un procédé de traitement d'images comprenant une détermination de trois intensités temporelles ($G_{t-1}$, $G_t$, $G_{t+1}$) lissées dans trois images successives ($J_{t-1}$, $J_t$, $J_{t+1}$) d'une séquence où l'image à filtrer est l'image centrale ($J_t$) ; un TEST de l'intensité temporelle lissée ($G_t$) dans l'image centrale vis-à-vis des deux autres ($G_{t-1}$, $G_{t+1}$) pour distinguer :

un premier cas où l'intensité temporelle lissée ($G_t$) est substantiellement différente des deux autres intensités
($G_{t-1}$, $G_{t+1}$) et où on attribue ladite intensité temporelle lissée ($G_t$) comme valeur filtrée ($R_t$) dans l'image centrale ($J_t$) ,
et un second cas où l'intensité temporelle lissée ($G_t$) est substantiellement égale à au moins une des deux autres intensités ($G_{t-1}$, $G_{t+1}$) et où on attribue comme valeur filtrée dans l'image centrale ($J_t$), le résultat ($R_t$) d'un MEDIAN passé sur lesdites trois intensités temporelles lissées.

Le lissage préalable des trois images est effectué individuellement par un filtre spatial FMH-1D ou FMH-2D.

Ce procédé est avantageusement mis en oeuvre dans un appareil d'imagerie médicale à rayons X en mode fluoroscopique.

Application : Appareil d'imagerie médicale à rayons X

FIG.1A

## Description

L'invention concerne un procédé de traitement d'image pour réduire le bruit dans une image, incluant une détermination de trois intensités temporelles relatives à un pixel courant de même localisation dans trois images successives en séquence, où l'image à traiter est l'image centrale de la séquence. L'invention concerne également un appareil médical incluant un tel système.

Ce procédé est appliqué pour réduire le bruit dans une séquence d'images en préservant les fins détails d'objets en mouvement. Par fins détails, on entend des objets de 1 à quelques pixels par exemple 1 à 10 pixels. L'invention trouve particulièrement son application dans le traitement des images vidéo ou bien dans celui des images médicales.

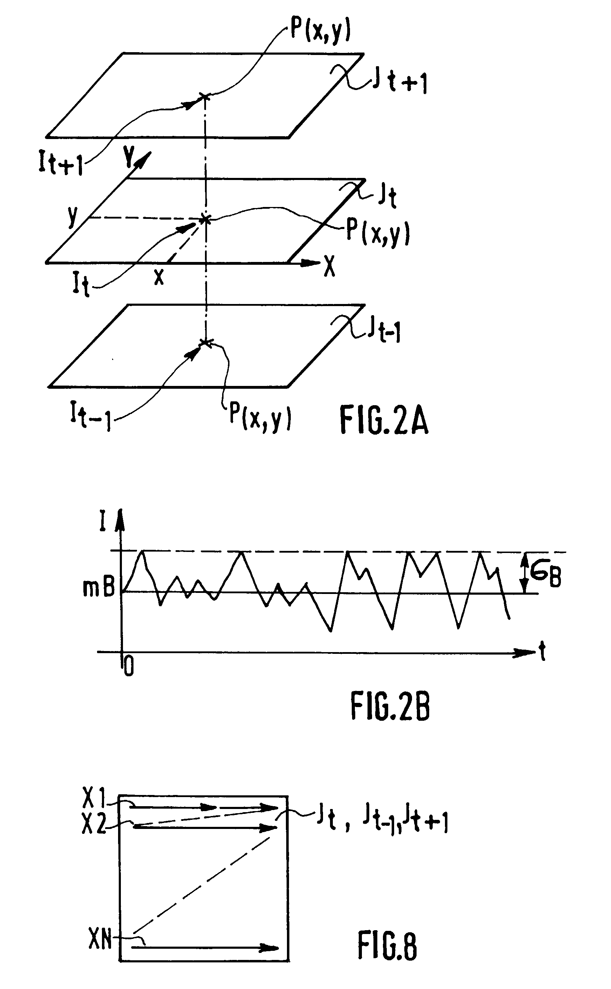

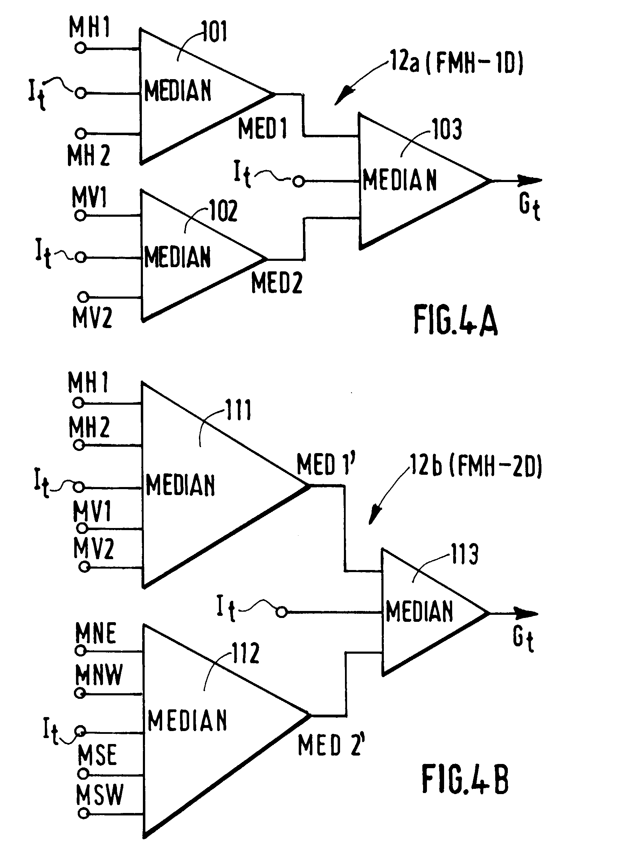

Un procédé de traitement d'image pour réduire le bruit et préserver les fins détails est déjà connu de la publication "A new class of Detail-Preserving Filters for Image Processing" par ARI NIEMINEN, PEKKA HEINONEN, ET YRJO NEUVO, dans IEEE TRANSACTIONS ON PATTERN ANALYSIS AND MACHINE INTELLIGENCE, VOL.PAMI-9, N°1, JANUARY 1987. Ce document décrit d'une façon générale des filtres spatiaux bidimensionnels incluant un médian appliqué à une structure à réponse impulsionnelle finie notée FMH-2D (la notation F est pour FIR: Réponse Impulsionnelle Finie ; M est pour MEDIAN, H est pour Hybride ; 2D est pour bidimensionnel). En particulier, en référence à la FIG.4 et au paragraphe II-C du document, un filtre à Réponse Impulsionnelle Finie (FIR) du type FMH-2D comprend quatre petits masques linéaires de chacun deux pixels formant quatre branches disposées à 90° dans le plan de l'image autour d'un pixel courant. Le filtrage comprend une étape de moyennage de l'intensité des deux pixels dans les petits masques, et une étape de classement des intensités moyennées obtenues sur les quatre branches et de l'intensité du pixel courant central effectué par un MEDIAN qui fait la sélection d'une de ces intensités. Un autre filtre noté FMH-1D est décrit en référence à la FIG.2 et au paragraphe II-B avec un ou plusieurs niveaux de MEDIANS. Le filtre FMH-1D comprend deux masques élémentaires placés sur une seule direction dans le plan, et la réalisation d'un MEDIAN sur les intensités moyennées dans les masques et l'intensité du pixel courant central. Le problème est que ces filtres exclusivement spatiaux fournissent seulement un débruitage moyen, ils laissent subsister des taches dues au bruit (NOISE PATCHES, NOISE PATTERNS).

Un but de l'invention est de fournir un procédé de traitement d'image incluant un filtrage qui fournit un débruitage amélioré exempt de taches, et exempt de traînées de bruit dans les mouvements, et qui, en particulier, n'efface pas les fins détails d'objets en mouvement dans une séquence d'images.

Ce but est atteint au moyen d'un procédé de traitement d'image pour réduire le bruit dans une image, selon la revendication 1.

Un avantage du procédé est qu'il est d'une complexité très faible : seulement un paramètre doit être défini, qui est le nombre de pixels dans le masque élémentaire du filtre FMH et le seuil.

Un appareil d'imagerie médicale, comprend des moyens pour mettre en oeuvre ce procédé, selon la revendication 8. Cet appareil permet de suivre en direct en mode fluoroscopique des opérations très délicates utilisant de très fins outils avec une netteté d'image et une conservation du mouvement des fins outils qui nécessiteraient autrement une beaucoup plus forte dose de rayonnements nocifs au patient et au praticien.

L'invention est décrite ci-après en détail en référence aux figures schématiques annexées dont :

- la FIG.1A montre, sous forme de blocs fonctionnels représentant des étapes, le filtre spatial ayant une composante temporelle noté FMH-3D selon l'invention et la FIG.1B représente le bloc fonctionnel de TEST du filtre de la FIG.1A ;
- la FIG.2A représente trois images successives d'une séquence d'images et la FIG.2B illustre une mesure de l'écart type du bruit ;
- la FIG.3A représente un filtre FIR-1D pour mettre en oeuvre le filtre FMH-1D de la FIG.4A, et la FIG. 3B représente un filtre FIR-2D pour mettre en oeuvre le filtre FMH-2D de la FIG.4B;
- la FIG.4A représente un filtre FMH-1D et la FIG.4B un filtre FMH-2D ;
- la FIG.5A représente trois images successives d'une séquence d'images incluant un objet fin en mouvement et la FIG.5B représente le classement des intensités liées aux images de la FIG.5A pour la sélection par un MEDIAN ;
- la FIG.6A représente trois images successives d'une séquence d'images incluant un objet en forme de "plateau" en mouvement et la FIG.6B représente le classement des intensités liées aux images de la FIG.6A pour la sélection par un MEDIAN ;
- la FIG.7 représente l'action de la porte logique AND sur les signaux sélectionnant les intensités ;
- la FIG.8 illustre une méthode standard de balayage de l'image à traiter ;
- la FIG.9 représente un appareil d'imagerie médicale mettant en oeuvre le procédé.

La FIG.1A illustre les étapes d'un procédé de traitement d'image pour réduire le bruit dans une image en préservant les fins détails, tels qu'un cathéter par exemple qui peuvent avoir un diamètre de moins de 10 pixels. En outre, ce procédé est très résistant au mouvement, c'est-à-dire qu'il réduit le bruit dans les images d'une séquence d'images en préservant très bien des fins détails d'un objet en mouvement d'une image à l'autre, et en particulier d'un objet fin tel qu'un cathéter en mouvement.

Ce procédé s'applique en particulier à des séquences d'images de rayons X obtenues en mode fluoroscopique où l'intensité des rayons X provenant d'une source pour former les images est très faible et où les images sont très bruitées. Ces images comprennent à la fois du bruit et des pics de bruit. Ce procédé s'applique aussi aux images de télévision destinées à être codées. Les images vidéo ont un bruit qui contient des hautes fréquences ; même lorsque le bruit n'est pas gênant en soi, les hautes fréquences sont difficiles et coûteuses à coder ; il est donc préférable d'extraire le bruit des images vidéo avant de les coder.

En référence à la FIG.2A, de préférence, le procédé décrit ci-après est mis en oeuvre en utilisant trois images temporelles successives. L'image qui arrive en premier dans le temps est notée $J_{t-1}$ et appelée CAUSALE ; celle qui arrive en second est notée $J_t$ et appelée IMAGE DU PRESENT; celle qui arrive en troisième est notée $J_{t+1}$ et appelée ANTICAUSALE. Soit un pixel P(x,y) repéré par ses coordonnées x,y dans un repère d'axes X,Y, dans ces images. Le procédé filtre l'intensité $I_t(x,y)$ du pixel P(x,y) dans l'image du PRESENT $J_t$ en s'aidant de l'intensité $I_{t-1}(x,y)$ et $I_{t+1}(x,y)$ du même pixel dans les images CAUSALE ET ANTICAUSALE. Ces intensités sont notées respectivement $I_t$, $I_{t-1}$ et $I_{t+1}$ ci-après par simplicité.

En référence aux FIGS.1A, 3A à 3D et 4A à 4B, on réalise d'abord un filtrage spatial sur chacune des trois images successives de la séquence en utilisant par exemple l'un des filtres purement spatiaux FMH-1D ou FMH-2D respectivement déjà connus de l'état de la technique. Ce filtrage spatial est destiné à lisser chacune des images individuellement vis-à-vis des pics de bruit. Les filtres spatiaux sont appliqués au pixel courant P(x,y) qui est alors le pixel central des branches des masques de ces filtres. Selon les filtres considérés, lesdites branches sont horizontales ou verticales ou bien en diagonale, c'est-à-dire selon des lignes ou des colonnes des images ou bien selon les bissectrices des lignes et colonnes. Les masques sont de quelques pixels disposés linéairement. Des masques de 2 pixels sont très satisfaisants.

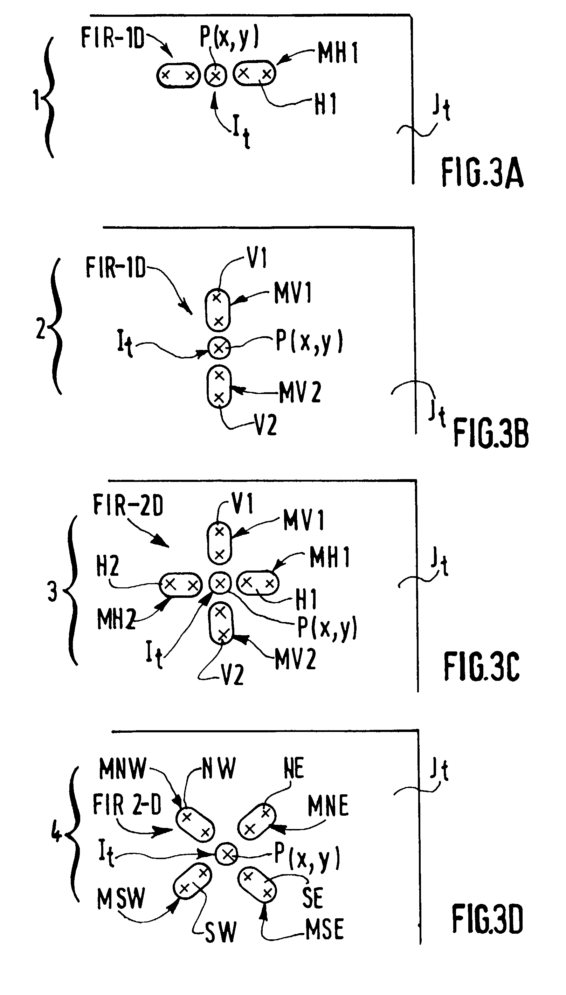

Tel que représenté sur la FIG.4A, et appliqué sur l'image du présent $J_t$, un filtre spatial FMH-1D comprend un filtre MEDIAN 101 entre la moyenne MH1 d'intensité des pixels dans la branche H1 du filtre élémentaire FIR-1D référencé 1 et représenté sur la FIG.3A, la moyenne MH2 d'intensité des pixels dans la branche H2 et l'intensité $I_t$ du pixel central P(x,y) pour fournir une intensité MED1. Ce filtre spatial FMH-1D comprend en outre un filtre MEDIAN 102 entre la moyenne MV1 dans la branche V1, la moyenne MV2 dans la branche V2 du filtre élémentaire FIR-1D référencé 2 et représenté sur la FIG.3B et l'intensité du pixel central $I_t$ pour fournir une intensité MED2. Ce filtre spatial FMH-1D comprend alors un filtre MEDIAN référencé 103 entre les intensités MED1, MED2 et l'intensité $I_t$ du pixel central, qui fournit une intensité temporelle spatialement lissée notée $G_t(x,y)$ pour le point P(x,y) de coordonnées x,y dans l'image du présent.

Les mêmes opérations de filtrage spatial FMH-1D sont effectuées aussi dans l'image causale et dans l'image anticausale pour fournir les deux intensités temporelles spatialement lissées supplémentaires $G_{t-1}(x,y)$ et $G_{t+1}(x,y)$. Les intensités temporelles lissées $G_t(x,y)$, $G_{t-1}(x,y)$ et $G_{t+1}(x,y)$ sont ci-après notées $G_t$, $G_{t-1}$ et $G_{t+1}$ par simplicité. Les branches du filtre élémentaire de la FIG.3B sont tournées de 90° vis-à-vis de celles du filtre élémentaire de la FIG.3A. Le filtre MEDIAN 103 est dit en cascade avec les filtres MEDIANS 101, 102.

Tel que représenté sur la FIG.4B un filtre purement spatial FMH-2D, appliqué sur l'image du présent $J_t$, comprend un filtre MEDIAN référencé 111 entre quatre moyennes d'intensité MH1, MH2, MV1, MV2 respectivement dans les branches H1, H2, V1, V2 d'un filtre spatial élémentaire FIR-2D référencé 3 tel que représenté sur la FIG.3C et l'intensité $I_t$ du pixel central pour fournir une intensité MED1'. Puis ce filtre spatial FMH-2D de la FIG.4B comprend un filtre MEDIAN référencé 112 entre quatre moyennes d'intensité MNE, MNW, MSE, MSW respectivement des branches NE, NN, SE, SW d'un filtre spatial élémentaire FIR-2D référencé 4, tel que représenté sur la FIG.3D et l'intensité $I_t$ du point central. Les branches de filtre de la FIG.3D sont tournées de 45° vis-à-vis des branches du filtre de la FIG. 3C. Ensuite un filtre MEDIAN 113 est appliqué entre les intensités MEDI', MED2' et l'intensité $I_t$ du pixel central pour fournir une intensité temporelle spatialement lissée notée $G_t$ pour le point P de coordonnées x,y dans l'image $J_t$ du présent. Par des opérations analogues dans l'image causale $J_{t-1}$, et dans l'image anticausale $J_{t+1}$, on obtient respectivement les deux autres intensités temporelles spatialement lissées $G_{t-1}$ et $G_{t+1}$ pour les trois images successives de la séquence.

De nombreuses autres combinaisons des filtres élémentaires spatiaux FIR-1D ou FIR-2D avec des filtres MEDIANS disposés en cascade en un ou plusieurs niveaux comme enseigné dans le document cité au titre d'état de la technique sont possible pour constituer des filtres purement spatiaux notés FMH.

En référence à la FIG.1A, une structure de filtre spatial FMH est choisie et est appliquée sous forme de blocs référencés 11, 12, 13, pour un pixel courant donné P(x,y), dans chacune des trois images successives $J_{t-1}$, $J_t$, $J_{t+1}$ pour remplacer les intensités temporelles d'origine $I_{t-1}$, $I_t$, $I_{t+1}$ par les intensités temporelles spatialement lissées vis-à-vis des pics de bruit $G_{t-1}$, $G_t$ et $G_{t+1}$.

En référence à la FIG.8, le procédé est rendu automatique en balayant chaque image $J_{t-1}$, $J_t$, $J_{t+1}$ d'une manière standard et systématique, par exemple de gauche à droite et de haut en bas, parallèlement à l'axe de référence X de l'image, selon des droites de balayage X1, X2.., XN..etc.

On notera qu'un filtrage MEDIAN présente un avantage par rapport à la réalisation d'une MOYENNE. Cet avantage réside dans le fait que le résultat du filtre MEDIAN n'est pas biaisé par un écart d'intensité atypique d'une de ses entrées. Alors qu'une MOYENNE effectuée entre des intensités dont l'une fait un écart atypique avec les autres est biaisée par la présence de cette valeur atypique. C'est pourquoi l'utilisation des filtres spatiaux FMH à base de filtres MEDIANS est particulièrement intéressante.

En référence à la FIG.1A, les étapes suivantes 20,30,40 du procédé consistent à sélectionner une valeur d'intensité temporelle spatialement lissée et à l'attribuer au pixel courant $P(x,y)$ dans l'image temporelle du présent $J_t$.

A cet effet, on définit deux grandeurs. En référence à la FIG.2B, la première grandeur est l'écart type du bruit notée $s_B$ par rapport à la moyenne du bruit notée $m_B$. L'écart type du bruit $s_B$ peut être déterminé A PRIORI comme une valeur d'un certain nombre de niveaux d'intensité, par exemple 15 niveaux d'intensité sur 256 niveaux d'intensité, ou bien peut être déterminé par toute méthode connue de l'homme du métier. La FIG.2B montre le niveau de la moyenne d'intensité $m_B$ qui est supposé constant en fonction du temps t, et les variations du bruit qui déterminent un écart $s_B$ par rapport à cette moyenne, mesuré sur un axe d'intensité I.

La seconde grandeur est une constante de proportionnalité K. Le facteur obtenu par le produit $Kxó_B$ est appelé facteur de débruitage et constitue un seuil réglé empiriquement pour obtenir un débruitage voulu de l'utilisateur.

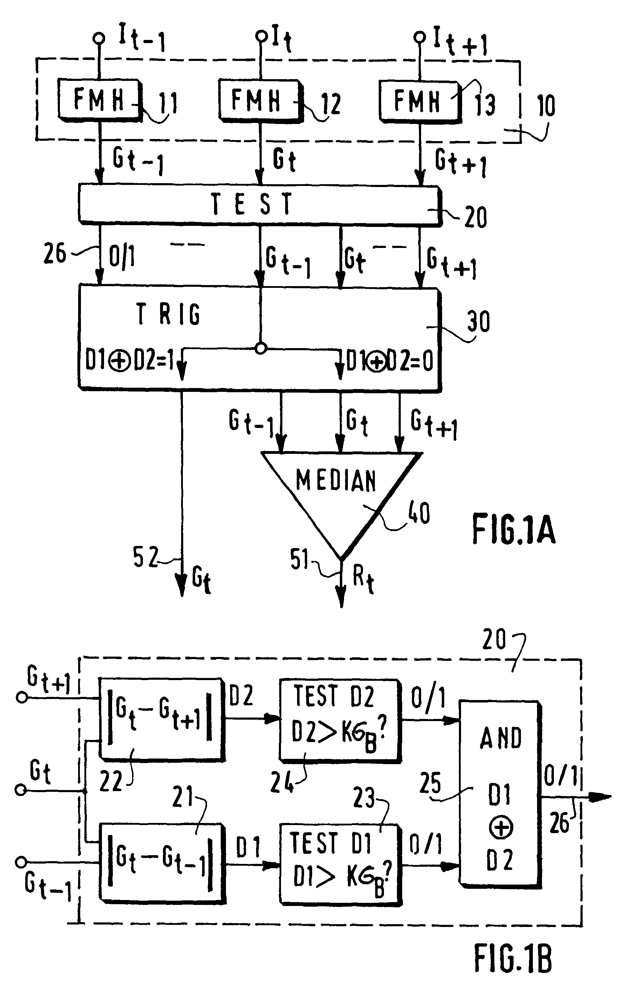

Dans la deuxième étape 20, on met en oeuvre des sous-étapes illustrées par la FIG.1B pour détecter d'une part un premier cas où l'intensité temporelle $G_t$ est très différente des deux autres intensités temporelles $G_{t-1}$ et $G_{t+1}$, et pour détecter d'autre part un deuxième cas, où l'intensité temporelle $G_t$ est substantiellement égale à au moins une des deux autres intensités temporelles $G_{t-1}$ et $G_{t+1}$. Cette opération permet de séparer deux situations qui sont :

   le mouvement d'un fin objet (PASSING-BY MOVEMENT)
   le mouvement d'un objet étendu ayant une forme appelée "plateau" (PLATEAU-MOTION).

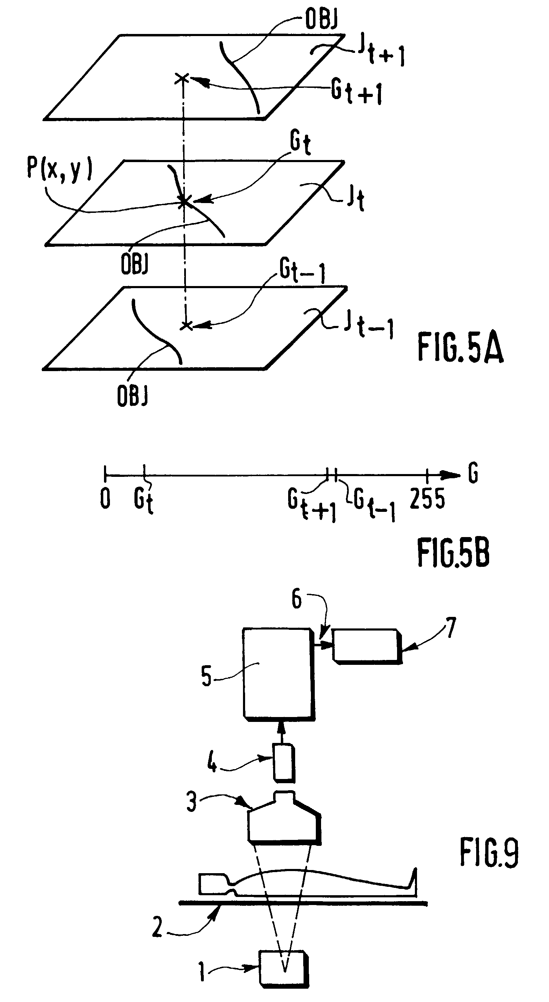

La FIG.5A montre l'effet du mouvement d'un objet fin noté OBJ entre les trois images $J_{t-1}$, $J_t$, $J_{t+1}$. Dans l'image $J_{t-1}$ l'objet fin OBJ n'est pas sur le pixel $P(x,y)$, mais il y est dans l'image $J_t$, et il n'y est plus dans l'image $J_{t+1}$. Donc l'intensité temporelle spatialement lissée $G_t$ est très différente des autres intensités temporelles spatialement lissées $G_{t-1}$ et $G_{t+1}$. La FIG.5B montre le classement de ces intensités temporelles lissées $G_{t-1}$, $G_t$, $G_{t+1}$ sur un axe d'intensité G, où 0 correspond à l'intensité minimale ou du noir dans l'image et où 255 correspond à une forte intensité ou du blanc.

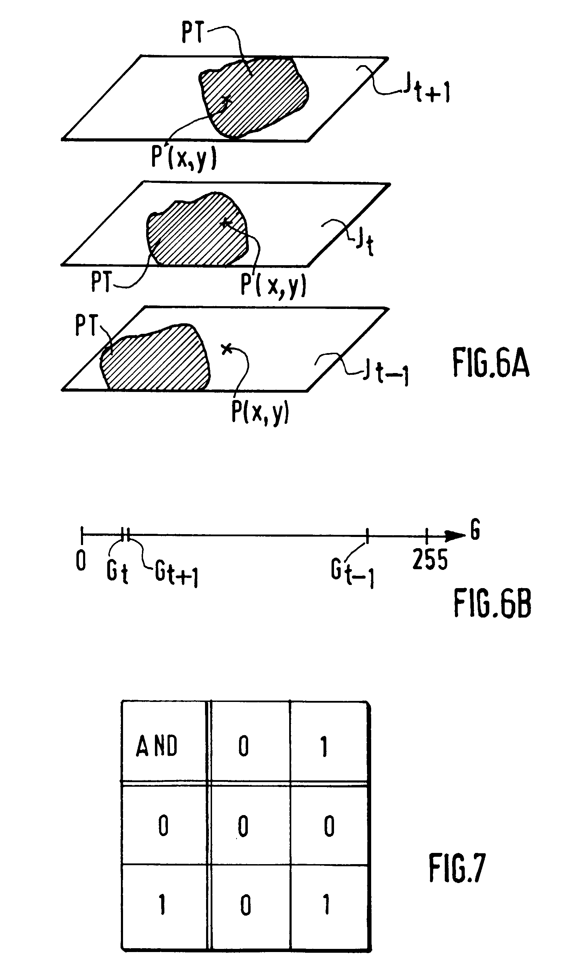

La FIG.6A montre l'effet du mouvement d'un "plateau" noté PT entre les trois images $J_{t-1}$, $J_t$, $J_{t+1}$. Dans l'image $J_{t-1}$ tout à fait à titre d'exemple, le plateau PT n'est pas encore en $P(x,y)$, mais il y est dans l'image

$J_t$ et il y est encore dans l'image $J_{t+1}$. Donc, en référence à la FIG.6B, dans le cas d'un plateau, en général l'intensité $G_t$ dans l'image $J_t$ est au moins substantiellement la même que celle de l'image précédente ou bien que celle de l'image suivante.

De ces FIGS.6A, 6B, il résulte qu'il n'est pas souhaitable de sélectionner systématiquement l'une des intensités $G_t$, $G_{t-1}$, $G_{t+1}$ pour le pixel $P(x,y)$ en appliquant un MEDIAN, car le résultat donné par ce MEDIAN est systématiquement mauvais dans le cas d'un mouvement de fin objet, puisque le MEDIAN va choisir une valeur très éloignée de $G_t$.

Pour éviter une telle erreur, le présent procédé applique dans cette étape 20 appelée TEST, une sélection des deux situations décrites. Ces deux situations sont sélectionnées par la mise en oeuvre de deux branches de sous-étapes illustrées par la FIG.1B :

   dans la première branche, la valeur absolue D1 de la différence entre $G_t$ et $G_{t-1}$ est calculée dans une première sous-étape 21 puis comparée au facteur de débruitage $Ks_B$ dans une seconde sous-étape 23, par un TEST de D1 selon la formulation :

$$| G_t - G_{t-1} | > Kó_B ?$$

La réponse OUI ou NON obtenue à l'issue de la seconde sous-étape 23 est introduite à la première entrée d'un "ET" logique noté AND référencé 25 sur la FIG.1B.

   dans la seconde branche, la valeur absolue D2 de la différence entre $G_t$ et $G_{t+1}$ est calculée dans une première sous-étape 22 puis comparée au facteur de débruitage $Ks_B$ dans une seconde sous-étape 24 par un test de D2 selon la formulation :

$$| G_t - G_{t+1} | > Kó_B ?$$

La réponse OUI ou NON qui est obtenue à l'issue de la seconde sous-étape 24 est introduite à la seconde entrée du "ET" logique noté AND sur la FIG.1B, qui constitue une troisième sous-étape commune aux deux branches de l'étape de TEST 20.

La FIG.7 représente l'action de la porte logique 25 "ET"(AND) sur les entrées OUI ou NON. Le OUI et le NON sont représentés par un signal 1 et 0 respectivement.

La sortie du "ET" logique 25 est soumise à une étape notée TRIG et référencée 30 sur la FIG.1A qui déclenche :

   soit l'action d'un MEDIAN 40 pour effectuer une sélection $R_t$ entre les trois intensités temporelles $G_t$, $G_{t-1}$, et $G_{t+1}$ ,
   soit la sélection automatique de la valeur temporelle $G_t$ pour appliquer comme valeur d'intensité temporelle filtrée $R_t$ sur le pixel courant $P(x,y)$ de l'image du présent $J_t$.

En référence à la FIG.7, la porte logique "ET" a une sortie 1, c'est-à-dire OUI, uniquement dans le cas où les entrées sont toutes deux égales à 1, correspondant à deux entrées OUI selon lesquelles à la fois les deux valeurs absolues D1 et D2 des différences I $G_t$ - $G_{t-1}$ I et I $G_t$ - $G_{t+1}$ I sont supérieures à $ks_B$. Cela signifie que $G_t$ est une valeur d'intensité temporelle très différente de $G_{t-1}$ et $G_{t+1}$, ce qui correspond au cas de mouvement fugitif d'un fin objet OBJ représenté sur la FIG. 5A. L'étape TRIG, référencée 30 déclenche alors la sélection directe de $G_t$ comme valeur d'intensité temporelle filtrée $R_t$ pour P(x,y) dans $J_t$ puisqu'un filtre MEDIAN donnerait une valeur d'intensité qui effacerait l'objet fin réalisant le mouvement furtif comme on a expliqué plus haut.

Dans tous les autres cas, où au moins une des deux entrées de la porte "ET" est égale à zéro, la sortie est égale à zéro, correspondant à une entrée OUI et une entrée NON, selon laquelle seulement une des deux valeurs absolues D1, D2 de différences I $G_t$ - $G_{t-1}$ I et I $G_t$ - $G_{t+1}$ I est supérieure à $ks_B$. En référence à la FIG.6B, cela signifie que $G_t$ est une valeur d'intensité proche soit de $G_{t-1}$ soit de $G_{t+1}$, l'autre valeur d'intensité étant plus éloignée. On a donc affaire à un mouvement du "plateau" PT (PLATEAU MOTION) selon la FIG.6A. L'étape 30 notée TRIG déclenche alors l'action d'un MEDIAN référencé 40 ayant pour entrées les trois intensités temporelles $G_t$, $G_{t-1}$, et $G_{t+1}$ et pour sortie la valeur $R_t$ qui est la valeur d'intensité temporelle filtrée à appliquer au pixel P(x,y) dans $J_t$ du PRESENT. Ce MEDIAN choisit pour $R_t$ la valeur $G_t$ ou bien celle des deux valeurs entre $G_{t-1}$ et $G_{t+1}$ qui a donné dans la sous-étape 23, 24 une valeur absolue de la différence avec $G_t$ petite, c'est-à-dire une réponse NON à la question : I différence I > seuil $K\acute{o}_B$.

De la description précédente il résulte qu'il existe un cas, celui où un mouvement fugitif d'un fin objet se produit dans une zone de l'image, où les pixels relatifs à ce fin objet ne sont filtrés que par un seul filtrage spatial de lissage des pics de bruit. Dans tous les autres cas, c'est-à-dire dans toutes les autres zones de l'image, il est souhaitable que les pixels de l'image subissent deux filtrages successifs : le premier spatial et le second temporel. L'opération appelée TEST qui permet de décider si on va se limiter à ce seul filtrage spatial pour un pixel donné ou bien si on peut appliquer deux filtrages successifs est donc très importante.

En effet, un filtrage limité au seul filtre FMH-1D ou 2D peut introduire dans la zone qui entoure le pixel traité les taches et textures de bruit dont on a parlé plus haut parce que les filtres élémentaires des FMH favorisent certains directions plus que d'autres dans la zone considérée. C'est pourquoi l'opération appelée TEST repose sur le facteur de débruitage ajustable K ó $_B$.

Dans l'ajustage du facteur K ó $_B$ par le moyen du réglage de K, on doit prendre en compte que :

Si K est trop petit, alors les TESTS donnent toujours une réponse OUI, et on ne peut jamais passer le MEDIAN temporel. Le filtrage reste toujours purement spatial, avec les conséquences déjà décrites. Si K est trop grand, alors les TESTS donnent toujours une réponse NON, et on a toujours l'opération du MEDIAN en sortie qui risque d'effacer les mouvements furtifs d'objets fins.

Lorsque le paramètre K est correctement réglé, le procédé conserve les fins objets en mouvement furtifs en excluant le MEDIAN temporel pour le traitement des pixels du fin objet en mouvement, et le procédé applique le filtrage spatial suivi du MEDIAN temporel pour le traitement de tous les autres pixels de l'image. Comme le procédé s'applique pixel après pixel, lorque le MEDIAN n'est pas déclenché et que seul le filtrage spatial agit, cela concerne seulement quelques pixels représentant l'objet fin en mouvement. Les autres zones de l'image subissent les deux filtrages c'est-à-dire le filtrage spatial suivi du MEDIAN temporel.

D'autre part, il est également important que le facteur K s'applique sur l'écart type du bruit $s_B$ de manière à ce que l'opération de TEST tienne compte du niveau de bruit dans l'image. Il n'est autrement pas aisé de détecter un objet fin sans tenir compte du bruit.

Le procédé décrit ci-dessus permet de filtrer de manière simple les images temporelles d'une longue séquence d'images les unes après les autres en se servant pour le filtrage d'une image donnée des données acquises lors du filtrage d'images précédentes. En réalité, dès la quatrième image $J_{t+2}$ arrivant dans la séquence d'images, après $J_{t+1}$, on a déjà obtenu deux résultats de filtres FMH déjà calculés pour $J_t$ et $J_{t+1}$. Donc le coût à chaque arrivée d'une nouvelle image dans la séquence est un calcul de FMH référencé 11, 12, 13 ; un calcul de MEDIAN 100, 102, 103 ou 111, 112, 113 et deux TESTS. Ces opérations peuvent être effectuées en temps réel. On peut utiliser pour mettre en oeuvre ce procédé un processeur connu, de référence "DIGITAL SIGNAL PROCESSIF DSP-C80". Les étapes sont mises en oeuvre par ce processeur en 15 ms pour des images comprenant 512 x 512 pixels. Or les images défilent à la cadence d'une image toutes les 40 ms pour une séquence de 25 images par seconde. Donc les images sont traitées facilement en temps réel.

En ce qui concerne le facteur de filtrage ou seuil $K\acute{o}_B$, il peut être tabulé et le "ET" logique est depuis longtemps connu de l'homme du métier. Le filtre décrit en référence aux FIGS.1A et 1B est donc facile à implanter. Il présente l'avantage de ne pas comprendre de multiplication. Dans les étapes du filtre selon l'invention qui est un filtre spatial à composantes temporelles, les FMH purement spatiaux 11, 12, 13 débruitent l'image $J_t$ et en particulier éliminent les pics de bruit. En revanche ces filtres spatiaux laissent occasionnellement des taches (PATCHES) ou structures de bruits (NOISE PATTERNS) dues à la forme des masques des filtres élémentaires spatiaux référencés 1, 2, 3 ou 4. Selon le présent procédé, le filtre MEDIAN 40, qui est ensuite appliqué de manière temporelle sur les intensités temporelles déjà spatialement filtrées $G_t$, $G_{t-1}$, et $G_{t+1}$ débruite plus fortement l'image et supprime complètement les taches de bruit. D'une manière générale, le filtre représenté aux FIGs.1 A et 1B est très résistant au mouvement fugitif d'un objet fin, et résout donc le problème exposé en référence aux FIGs.5A et 6A.

A titre d'exemple, en référence à la FIG.9, un appareil d'imagerie médicale comprend un système de radiographie numérisée ayant des moyens pour mettre en oeuvre la méthode de réduction du bruit décrite plus haut. Cet appareil comprend une source 1 de rayons X, une table 2 pour recevoir le patient, un dispositif récepteur des rayons X ayant traversé le patient, et en particulier un dispositif intensification d'image 3 couplé à un tube vidéo 4 qui fournit des données à un système 5 de traitement d'image comprenant un microprocesseur. Ce dernier comprend plusieurs sorties dont une sortie 6 couplée à un moniteur 7 pour la visualisation des images traitées ou à traiter, ou bien de séquences d'images.

L'image radiographique numérisée peut contenir 512 x 512 ou 1024 x 1024 pixels codés sur 8 bits ou 10 bits. Chaque pixel peut être ainsi affecté d'un parmi 256 ou 1024 niveaux d'intensité. Par exemple, les régions sombres ont un niveau d'intensité faible, et les régions claires de l'image ont un niveau d'intensité élevé.

L'image numérisée peut être obtenue en mode fluoroscopique. L'invention peut trouver son application particulièrement dans le traitement d'images artériographiques.

Le traitement de l'image numérique selon le procédé décrit plus haut est mis en oeuvre dans ses différentes étapes et opérations dans le système 5. Les données peuvent être stockées dans une zone mémoire non représentée. Des moyens d'enregistrement non représentés peuvent être en outre utilisés.

## Revendications

1. Procédé de traitement d'image pour réduire le bruit dans une image ($J_t$), comprenant une détermination de trois intensités temporelles relatives à un pixel courant [$P(x,y)$] de même localisation ($x,y$) dans trois images successives ($J_{t-1}$, $J_t$, $J_{t+1}$) en séquence, où l'image à traiter est l'image centrale ($J_t$), ce procédé comprenant en outre des étapes de :

> TEST desdites trois intensités temporelles ($G_{t-1}$, $G_t$, $G_{t+1}$) préalablement lissées des pics de bruit, pour distinguer un premier cas où l'intensité temporelle lissée ($G_t$) dans l'image centrale ($J_t$) est substantiellement différente des deux autres intensités temporelles lissées ($G_{t-1}$, $G_{t+1}$) d'un second cas où l'intensité temporelle lissée ($G_t$) dans l'image centrale ($J_t$) est

substantiellement égale à au moins une des deux autres intensités temporelles lissées ($G_{t-1}$, $G_{t+1}$),
> et attribution d'une intensité filtrée du bruit ($R_t$) au pixel courant [$P(x,y)$] dans l'image centrale ($J_t$), qui est dans le premier cas directement l'intensité temporelle lissée ($G_t$) au pixel courant dans l'image centrale et qui est dans le second cas le résultat d'un filtre MEDIAN appliqué sur les trois intensités temporelles lissées ($G_{t-1}$, $G_t$, $G_{t+1}$).

2. Procédé selon la revendication 1, où le TEST comprend des sous-étapes de :

> détermination de deux différences (D1, D2) constituées respectivement par les valeurs absolues des différences entre l'intensité temporelle lissée dans l'image central ($G_t$) et les intensités temporelles lissées dans les deux autres images ($G_{t-1}$, $G_{t+1}$),
> détermination d'un seuil ($K \acute{o}_B$),
> comparaison de chacune des différences au dit seuil ;
> déclenchement de l'attribution de l'intensité filtrée du bruit ($R_t$) selon l'étape mise en oeuvre dans ledit premier cas si à la fois les deux différences (D1,D2) sont supérieures au dit seuil, ou bien déclenchement de l'attribution de l'intensité filtrée du bruit ($R_t$) selon l'étape mise en oeuvre dans ledit second cas si pas plus d'une desdites différences n'est supérieure au dit seuil.

3. Procédé selon la revendication 2, où le seuil ($K s_B$) est un facteur de débruitage obtenu par le produit d'un facteur ajustable (K) et de l'écart type du bruit ($s_B$) par rapport à la moyenne du bruit dans l'image, et où le facteur ajustable (K) est réglé pour que l'exclusion du filtre MEDIAN soit limitée au cas où un fin objet en mouvement furtif est représenté dans une zone de l'image à traiter.

4. Procédé selon l'une des revendications 1 ou 2, ou le lissage des intensités des trois images successives vis-à-vis des pics de bruit est effectué spatialement et de manière individuelle dans chacune des trois images.

5. Procédé selon la revendication 4, où le lissage des intensités des trois images successives ($J_{t-1}$, $J_t$, $J_{t+1}$) est effectué individuellement au moyen d'un filtre spatial bidimensionnel incluant un ou des filtres MEDIANS appliqués en cascade à une ou des structures de masques à réponse impulsionnelle finie.

6. Procédé selon la revendication 4, où le lissage des intensités des trois images successives ($J_{t-1}$, $J_t$, $J_{t+1}$) est effectué individuellement au moyen d'un filtre spatial monodimensionnel incluant un ou des filtres MEDIANS appliqués en cascade à une ou des structures de masques à réponse impulsionnelle finie.

7. Procédé selon l'une des revendications 1 à 6 où les images sont balayées automatiquement de façon standard, pixel après pixel, et où les étapes sont mises en oeuvre automatiquement pour chaque pixel.

8. Appareil d'imagerie médicale, comprenant un système d'acquisition d'une séquence d'images numériques, et un système de traitement d'images qui a accès aux données d'image du système d'acquisition et à un système d'affichage et qui comprend un processeur pour mettre en oeuvre un procédé selon l'une des revendications 1 à 7.

FIG.1A

FIG.1B

P(x,y)

$J_{t+1}$

$I_{t+1}$

y

y

$J_t$

P(x,y)

X

$I_t$

x

$J_{t-1}$

$I_{t-1}$

P(x,y)

## FIG.2A

I

mB

$\sigma_B$

0

t

## FIG.2B

X1

X2

$J_t, J_{t-1}, J_{t+1}$

XN

## FIG.8

FIG.3A

FIG.3B

FIG.3C

FIG.3D

FIG.4A

FIG.4B

FIG.5A

FIG.5B

FIG.9

PT

P(x,y)

$J_{t+1}$

PT

P'(x,y)

$J_t$

PT

P(x,y)

$J_{t-1}$

**FIG.6A**

0    $G_t$    $G_{t+1}$         $G_{t-1}$    255    G

**FIG.6B**

| AND | 0 | 1 |
|-----|---|---|
| 0 | 0 | 0 |
| 1 | 0 | 1 |

**FIG.7**

**RAPPORT DE RECHERCHE EUROPEENNE**

Numéro de la demande

EP 98 20 4269

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | KOKARAM A C ET AL: "A SYSTEM FOR THE REMOVAL OF IMPULSIVE NOISE IN IMAGE SEQUENCES" PROCEEDINGS OF THE SPIE, vol. 1818, no. 1, 1 janvier 1992, pages 322-331, XP000565996 * abrégé * * alinéa 4 - alinéa 5; figure 2 * | 1-8 | G06T5/40 |
| A | US 5 384 865 A (LOVERIDGE JENNIFER C) 24 janvier 1995 * abrégé * * colonne 2, ligne 34 - colonne 3, ligne 30 * | 1-8 | |
| A | EP 0 578 311 A (PHILIPS ELECTRONICS NV) 12 janvier 1994 * abrégé * * colonne 1, ligne 43 - colonne 2, ligne 54 * | 1-8 | |
| D,A | NIEMINEN A ET AL: "A NEW CLASS OF DETAIL-PRESERVING FILTERS FOR IMAGE PROCESSING" IEEE TRANSACTIONS ON PATTERN ANALYSIS AND MACHINE INTELLIGENCE, vol. 9, no. 1, 1 janvier 1987, pages 74-90, XP000566982 * abrégé * * alinéa II; figures 2-7 * | 1-8 | **DOMAINES TECHNIQUES RECHERCHES (Int.Cl.6)** G06T |

Le présent rapport a été établi pour toutes les revendications

| Lieu de la recherche | Date d'achèvement de la recherche | Examinateur |
|---|---|---|
| LA HAYE | 20 avril 1999 | Gonzalez Ordonez, O |

**ANNEXE AU RAPPORT DE RECHERCHE EUROPEENNE
RELATIF A LA DEMANDE DE BREVET EUROPEEN NO.**          EP 98 20 4269

La présente annexe indique les membres de la famille de brevets relatifs aux documents brevets cités dans le rapport de
recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

20-04-1999

| Document brevet cité<br>au rapport de recherche | Date de<br>publication | Membre(s) de la<br>famille de brevet(s) | Date de<br>publication |
|---|---|---|---|
| US 5384865    A | 24-01-1995 | AUCUN | |
| EP 0578311    A | 12-01-1994 | DE    69322444 D<br>JP     6154200 A<br>US     5467380 A | 21-01-1999<br>03-06-1994<br>14-11-1995 |

EPO FORM P0460

Pour tout renseignement concernant cette annexe : voir Journal Officiel de l'Office européen des brevets, No.12/82